Europäisches Patentamt

European Patent Office

Office européen des brevets

(19)

(11) Veröffentlichungsnummer : **0 382 913 B1**

(12) **EUROPÄISCHE PATENTSCHRIFT**

(51) Int. Cl.⁵ : **B65G 21/14, B65H 29/36**

(45) Veröffentlichungstag der Patentschrift :
**26.08.92 Patentblatt 92/35**

(21) Anmeldenummer : **89122645.8**

(22) Anmeldetag : **08.12.89**

(54) **Transfervorrichtung, insbesondere für Verpackungsanlagen für Papierstapel in der Papierindustrie.**

(30) Priorität : **09.02.89 DE 3903820**

(43) Veröffentlichungstag der Anmeldung :
**22.08.90 Patentblatt 90/34**

(45) Bekanntmachung des Hinweises auf die
Patenterteilung :
**26.08.92 Patentblatt 92/35**

(84) Benannte Vertragsstaaten :
**AT BE CH DE ES FR GB GR LI LU NL SE**

(56) Entgegenhaltungen :
**EP-A- 0 192 193**
**DE-A- 1 915 647**
**GB-A- 2 147 866**
**GB-A- 2 175 562**
**NL-A- 7 908 174**

(73) Patentinhaber : **OSTMA Maschinenbau GmbH**
**Golzheimer Strasse 5**
**W-5352 Zülpich (DE)**

(72) Erfinder : **Odenthal, Heinz F.**
**Moselstrasse 63**
**W-5352 Zülpich (DE)**

(74) Vertreter : **Andrejewski, Walter, Dr. et al**
**Patentanwälte Andrejewski, Honke & Partner**
**Postfach 10 02 54 Theaterplatz 3**
**W-4300 Essen 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Transfervorrichtung, insbesondere für Verpackungsanlagen für Papierstapel in der Papierindustrie, - mit einem Vorrichtungsgestell, einem unterschiedlich weit ein- und ausfahrbaren Transfertisch, einer Mehrzahl von Umlenkwalzen und einem endlosen Transfergurt, wobei der Transfergurt über die Oberseite des Transfertisches und eine vordere Umlenkwalze am Transfertisch sowie über die Umlenkwalzen geführt ist und die Umlenkwalzen zumindest eine Ausgleichsschlaufe bilden, deren Ausgleichsweg der Ein- und Ausfahrbewegung des Transfertisches entspricht. Es versteht sich, daß zumindest eine der Umlenkwalzen angetrieben sein kann. In der Papierindustrie werden derartige Transfervorrichtungen hauptsächlich eingesetzt, um an einem Ende unverpackte Papierstapel aufzunehmen und diese am anderen Ende beispielsweise an eine Verpackungsanlage abzugeben. Dabei muß die Transfervorrichtung ohne weiteres auf Papierstapel unterschiedlichen Formats eingestellt und dazu auch unterschiedlich weit ein- und ausfahrbar sein. Je nach den betrieblichen Verhältnissen findet aber auch bei jeder Aufnahme eines solchen Papierstapels eine Ein- und Ausfahrbewegung über ein Teilstück der Transportlänge der Transfervorrichtung statt.

Bei der aus der DE-A-1 915 647 bekannten Transfervorrichtung, von der die Erfindung ausgeht, ist der Transfertisch teleskopartig ein- und ausfahrbar. Der Ein- und Ausfahrweg ist daher beschränkt. Insbesondere kann die Transfervorrichtung im Bedarfsfall nicht auf sehr kurze Transferlänge zusammengefahren werden. Im übrigen entstehen bei einigen Ausführungsformen störende Stufen, weil bei teleskopartig ein- und ausfahrbaren Bauteilen stufenförmige Übergänge systembedingt sind.

Bei einem in der NL-A-7 908 174 beschriebenen Förderer mit gelenkig verbundenen Fördererabschnitten sind die Förderabschnitte an Haltestangen aufgehängt, die ihrerseits an Schienen verfahrbar sind, so daß die Förderabschnitte zickzackförmig zusammengelegt werden können.

Aus der GB-A-2 147 866 ist es bekannt, gelenkig miteinander verbundene Förderabschnitte spiralig aufzuwickeln.

Der Erfindung liegt die Aufgabe zugrunde, eine Transfervorrichtung des eingangs beschriebenen grundsätzlichen Aufbaus so weiter zu entwickeln, daß ohne Schwierigkeiten ein sehr langer Ein- und Ausfahrweg verwirklicht werden kann und die Transfervorrichtung nichtsdestoweniger auf sehr kurze Baulänge zusammengefahren werden kann.

Zur Lösung dieser Aufgabe lehrt die Erfindung, daß der Transporttisch aus einer Mehrzahl von leistenförmigen Transportplattenelementen besteht, die an den Seiten laschenkettenartig verbunden sowie im eingefahrenen Zustand im Vorrichtungsgestell aufgerollt oder zickzackförmig zusammen gefahren sind sowie sich im ausgefahrenen Zustand zu dem ebenen Transfertisch unterschiedlicher Länge ergänzen, daß die Tischplattenelemente im Bereich der laschenkettenartigen Verbindungspunkte mit Laufrollen versehen und in dem Vorrichtungsgestell mit den Laufrollen in oberen und unteren Führungsschienen geführt sowie zickzackförmig zusammenfahrbar sind, wobei die unteren Führungsschienen über ein Weichenteilstück in die oberen Führungsschienen einlaufen, und daß die Tischplattenelemente in dem Bereich, in dem sie sich zu dem ebenen Transfertisch ergänzen, mit ihren Laufrollen in teleskopartig ein- und ausfahrbaren Führungsschienen geführt sind. Solche Führungsschienen sind in verschiedenen Ausführungsformen auch in der Möbelindustrie gebräuchlich. Es besteht aber auch die Möglichkeit, die Anordnung so zu treffen, daß die Tischplattenelemente in dem Bereich, in dem sie sich zu dem ebenen Transfertisch ergänzen, miteinander verriegelt sind und dadurch einen starren Transfertisch bilden, wobei die Verriegelung bzw. Entriegelung am Ende des Weichenteilstückes beim Ausfahren bzw. Einfahren erfolgt. Um das Ein- und Ausfahren zu bewirken, bestehen ebenfalls verschiedene Möglichkeiten. Eine von der Erfindung bevorzugte ist dadurch gekennzeichnet, daß an dem vordersten stirnseitigen Tischplattenelement ein Stelltrieb für die Ein- und Ausfahrbewegung angreift.

Im folgenden werden die Erfindung und die durch die Erfindung erreichten Vorteile anhand einer lediglich ein Ausführungsbeispiel darstellenden Zeichnung ausführlicher erläutert. Es zeigen in perspektivischer Darstellung

Fig. 1 die in kinematischer Hinsicht wesentlichen Bestandteile einer erfindungsgemäßen Transfervorrichtung im eingefahrenen Zustand des Transfertisches,

Fig. 2 den Gegenstand nach Fig. 1 bei ausgefahrenem Transfertisch.

Die in den Figuren dargestellte Transfervorrichtung ist insbesondere für Verpackungsanlagen für Papierstapel in der Papierindustrie bestimmt. Zum grundsätzlichen Aufbau gehören ein Vorrichtungsgestell 1, ein unterschiedlich weit ein- und ausfahrbarer Transfertisch 2, eine Mehrzahl von Umlenkwalzen 3 und ein endloser Transfergurt 4. Das übliche Maschinengestell wurde nicht gezeichnet. Die Anordnung ist so getroffen, daß der Transfergurt 4 über die Oberseite des Transfertisches 2 und eine vordere Umlenkwalze oder -nase 5 am Transfertisch 2 sowie über die Umlenkwalzen 3 geführt ist, wobei die Umlenkwalzen 3 im Ausführungsbeispiel zwei Ausgleichsschlaufen 6 bilden, deren Ausgleichsweg der Ein- und Ausfahrbewegung des Transfertisches 2 entspricht. Durch Doppelpfeile sind die entsprechenden Bewegungen angedeutet worden.

2

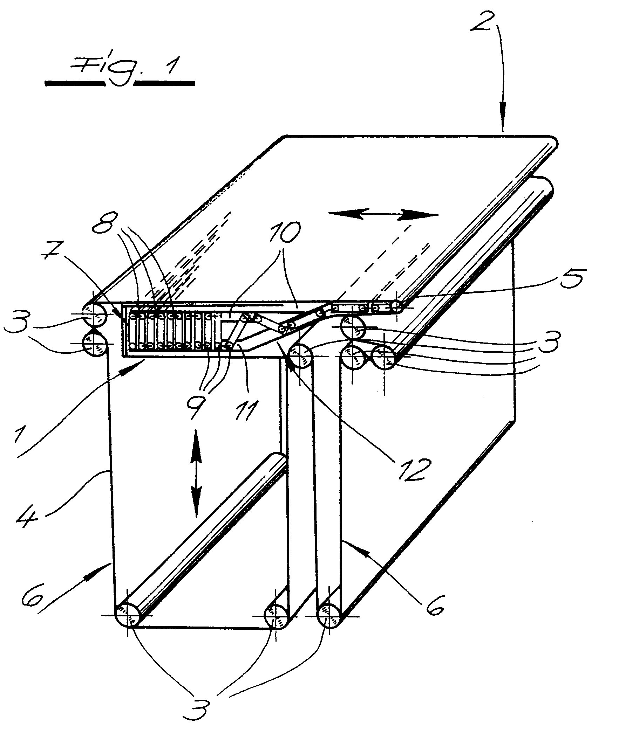

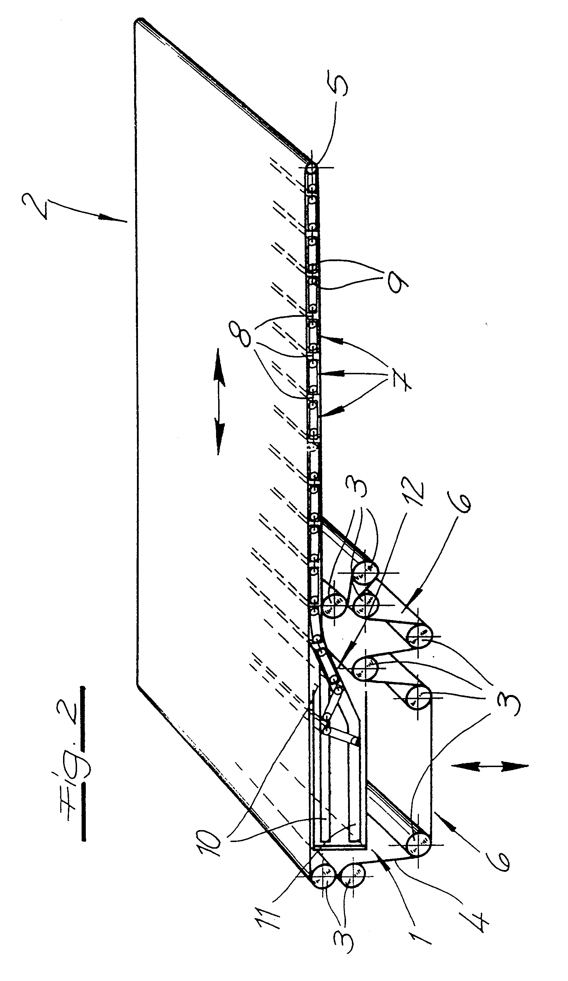

Der Transfertisch 2 besteht aus einer Mehrzahl von leistenförmigen Tischplattenelementen 7, die an den Seiten bei 8 laschenkettenartig verbunden sind sowie im eingefahrenen Zustand im Vorrichtungsgestell 1 zickzackförmig zusammengefahren sind. Diesen eingefahrenen Zustand erkennt man in der Fig. 1. Der ausgefahrene Zustand ist in der Fig. 2 dargestellt worden. Aus der Fig. 2 entnimmt man im übrigen, daß die Tischplattenelemente 7 sich im ausgefahrenen Zustand zu dem ebenen Transfertisch 2 ergänzen. In den Figuren wurde angedeutet, daß die Tischplattenelemente 7 im Bereich der 1 achenkettenartigen Verbindungspunkte bei 8 mit Laufrollen 9 in Form von Kugellagerrollen versehen sind. In dem Vorrichtungsgestell 1 sind die Tischplattenelemente 7 mit den Laufrollen in oberen 10 und unteren Führungsschienen 11 geführt sowie zickzackförmig zusammenfahrbar (vgl. Fig. 1). Man erkennt fernerhin, daß die unteren Führungsschienen 11 über ein Weichenteilstück 12 in die oberen Führungsschienen 10 einlaufen. Hier wurde im Plural formuliert, weil die Tischplattenelemente 7 an jeder ihrer Seiten entsprechende Einrichtungen aufweisen. Die Tischplattenelemente 7 können in dem Bereich, in dem sie sich zu dem ebenen Transfertisch 2 ergänzen, an ihren Seiten in teleskopartig ein- und ausfahrbaren Führungsschienen geführt sein, sie können aber auch in der beschriebenen Weise miteinander verriegelt sein. Man kann aber auch mit festen Führungsschienen arbeiten. Das Ein- und Ausfahren wird zweckmäßigerweise dadurch bewirkt, daß an dem vorderseitigen Tischplattenelement 7 oder an den teleskopartig ein- und ausfahrbaren Führungsschienen 10 ein Stelltrieb für die Ein- und Ausfahrbewegung angreift, der in der Zeichnung nicht erkennbar ist. Die Einfahrbewegung kann auch über den Transfergurt 4 gesteuert werden, indem man die Ausgleichsschlaufen 6 entsprechend verstellt. In dem Bereich oder unter dem Bereich, in dem sich in Fig. 1 die zickzackförmig zusammengefahrenen Tischplattenelemente 7 befinden, könnte auch eine Einrichtung zum rolladenartigen Aufrollen dieser Tischplattenelemente 7 angeordnet sein.

**Patentansprüche**

1.  Transfervorrichtung, insbesondere für Verpackungsanlagen für Papierstapel in der Papierindustrie, - mit
    einem Vorrichtungsgestell (1),
    einem unterschiedlich weit ein- und ausfahrbaren Transfertisch (2),
    einer Mehrzahl von Umlenkwalzen (3) und einem endlosen Transfergurt (4),
    wobei der Transfergurt (4) über die Oberseite des Transfertisches (2) und eine vordere Umlenkwalze (5) am Transfertisch (2) sowie über die Umlenkwalzen (3) geführt ist und die Umlenkwalzen (3) zumindest eine Ausgleichsschlaufe (6) bilden, deren Ausgleichsweg der Ein- und Ausfahrbewegung des Transfertisches (2) entspricht, **dadurch gekennzeichnet**, daß der Transfertisch (2) aus einer Mehrzahl von leistenförmigen Tischplattenelementen (7) besteht, die an den Seiten laschenkettenartig verbunden sowie im eingefahrenen Zustand im Vorrichtungsgestell (1) aufgerollt oder zickzackförmig zusammengefahren sind, sowie sich im ausgefahrenen Zustand eu dem ebenen Transfertisch ergänzen, daß die Tischplattenelemente (7) im Bereich der Laschenkettenartigen Verbindungspunkte mit Laufrollen (9) versehen und in dem Vorrichtungsgestell (1) mit den Laufrollen (9) in oberen und unteren Führungsschienen (10, 11) geführt sowie zickackförmig zusammenfahrbar sind, wobei die unteren Führungsschienen (11) über ein Weichenteilstück (12) in die oberen Führungsschienen (10) einlaufen, und daß die Tischplattenelemente (7) in dem Bereich, in dem sie sich zu dem ebenen Transfertisch (2) ergänzen, mit ihren Laufrollen (9) in teleskopartig ein- und ausfahrbaren Führungsschienen (10, 11) geführt sind.

2.  Transfervorrichtung nach Anspruch 1, dadurch gekennzeichnet, daß die Tischplattenelemente (7) im Bereich, in dem sie sich zu dem ebenen Transfertisch (2) ergänzen, miteinander verriegelt sind une dadurch einene starren Transfertisch (2) bilden, wobei die Verriegelung bzw. die Entriegelung am Ende des Weichenteilstückes (12) beim Auslaufen der Tischplattenelemente (7) aus dem Vorrichtungsgestell (1) bzw. beim Einlaufen der Tischplattenelemente (7) in das Vorrichtungsgestell (1) erfolgt.

3.  Transfervorrichtung nach einem der Ansprüche 1 oder 2, dadurch gekennzeichnet, daß dian dem vorderen stirnseitigen Tischenplattenelemente (7) in dem Bereich, ein Stelltrieb für die Ein- und Ausfahrbewegung angreift.

**Claims**

1.  A transfer device, more particularly for stacked paper sheet packaging equipment in the paper industry, - having

a framework (1)
a transfer table (2) advanceable and retractable over variable distances,
and
a plurality of guide rolls (3) with an endless transfer belt (4)
in which the transfer belt (4) passes across the top face of the transfer table (2) and a front return roller (5) on the transfer table (2) and is taken round the guide rolls (3), whilst the guide rolls (3) form at least one compensation loop (6) the compensation stroke of which corresponds to the advance and retraction stroke of the transfer table (2), characterised in that the transfer table (2) consists of a plurality of strip-shaped table leaves (7), which are connected to each other at the ends in the manner of a roller chain, rolled up or stacked in zigzag formation in the framework (1) in the retracted position and drawn out to form the flat transfer table in the advanced position, that the table leaves (7) have running rollers (9) at the joints in the roller chain assemblies, which running rollers (9) run in upper and lower guide rails (10, 11) in the framework (1) and can be stacked in zigzag formation, the lower guide rails (11) merging with the upper guide rails (10) at a fork section (12), and that the running rollers (9) guide the table leaves (7) in telescopically retractable and advanceable guide rails (10, 11) in the zone in which they open out to form the flat transfer table (2).

2. A transfer device as in Claim 1, characterised in that the table leaves (7) are locked together in the zone in which they open out to form the flat transfer table (2), thereby forming a rigid transfer table (2), the locking and unlocking taking place at the end of the fork section (12), as the table leaves (7) advance out of the framework (1) and as the table leaves (7) return into the framework (1).

3. A transfer device as in Claim 1 or 2, characterised in that a setting drive system for the advance and retraction motions engages on the foremost table leaf (7).

**Revendications**

1. Dispositif de transfert, notamment pour des machines d'emballage pour des piles de papier dans l'industrie papetière, - comportant
un châssis (1),
une table de transfert (2) pouvant être rétractée et ressortie sur des distances différentes,
une multiplicité de cylindres de renvoi (3) et une courroie de transfert sans fin (4),
et dans lequel la courroie de transfert (4) est guidée sur la face supérieure de la table de transfert (2) et sur un cylindre de renvoi avant (5) sur la table de transfert (2) ainsi que sur les cylindres de renvoi (3), et les cylindres de renvoi (3) forment au moins une boucle de compensation (6), dont le trajet de compensation correspondant au déplacement de retrait et de déploiement de la table de transfert (2), caractérisé en ce que la table de transfert (2) est constituée par une multiplicité d'éléments de plateau de table (7) en forme de barrettes, qui sont réunis, sur leurs côtés, à la manière de chaînes articulées et sont repliés sur eux-mêmes ou rassemblés selon une disposition en zig-zag, lorsqu'ils sont à l'état rétracté dans le châssis (1) du dispositif, et se complètent, à l'état déployé, pour former la table plane de transfert, que les éléments de plateau de table (7) comportent des galets de roulement (9) dans la zone des points de liaison en forme de chaînes articulées et sont guidés, dans le châssis (1) du dispositif, au moyen des galets de roulement (9) dans des rails supérieurs et inférieurs (10,11), les rails inférieurs de guidage (11) rejoignant, par l'intermédiaire d'un élément en forme d'aiguillage (12), les rails supérieurs de guidage (10), et que les éléments de plateau de table (7) sont guidés, dans la zone dans laquelle ils se complètent pour former la table plane de transfert (2), par leurs galets de roulement (9) dans des rails de guidage (10,11) pouvant être rétractés et déployés de façon télescopique.

2. Dispositif de transfert selon la revendication 1, caractérisé en ce que les éléments de plateau de table (7) sont verrouillés entre eux dans la zone dans laquelle ils se complètent pour former la table plane de transfert (2) et forment de ce fait une table rigide de transfert (2), le verrouillage et le déverrouillage s'effectuant à l'extrémité de l'élément en forme d'aiguillage (12) lors de la sortie des éléments de plateau de table (7) hors du châssis (1) du dispositif ou de leur introduction dans ce châssis.

3. Dispositif de transfert selon la revendication 1 ou 2, caractérisé en ce qu'un dispositif d'entraînement de réglage pour le déplacement de retrait et de déploiement est accroché à l'élément frontal avant (7) du plateau de table.

Fig. 1

Fig. 2